(19) **Europäisches Patentamt European Patent Office Office européen des brevets**

(11) **EP 2 322 957 A1**

(12) **EUROPEAN PATENT APPLICATION**

(43) Date of publication:
18.05.2011 Bulletin 2011/20

(51) Int Cl.:
*G02B 5/18* (2006.01)  *G02B 27/48* (2006.01)

(21) Application number: 09175783.1

(22) Date of filing: 12.11.2009

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(71) Applicant: poLight AS
3192 Horten (NO)

(72) Inventors:
• Kartashov, Vladimir
N-3189, Horten (NO)
• Akram, Muhammad Nadeem
N-3179, Horten (NO)

(74) Representative: Plougmann & Vingtoft A/S
Sundkrogsgade 9
P.O. Box 831
2100 Copenhagen Ø (DK)

(54) **A method, device and system for reducing speckle contrast**

(57) The present invention relates to a device and system for improving a laser light based imaging projection system, and especially to a device and system for controlling speckle contrast in laser light imaging projection systems according to a specific speckle reduction scheme. A device and system according to the present invention comprises at least on spatial light modulator with a programmable grating geometry on a reflective surface of the device. A series of control signals can then provide a static speckle pattern or a plurality uncorrelated speckle patterns. The device and system according to the present invention can utilize the programmable grating feature to decrease, or increase the speckle in whole images or parts of images being projected in the system.

Fig. 3

**Description**

**FIELD OF THE INVENTION**

The present invention relates to a method, device and a system for improving a laser light based imaging projection system, and especially to a method, device and system for reducing speckle contrast in laser light imaging projection systems.

**BACKGROUND OF THE INVENTION**

Projection displays are widely used in large-screen television, simulators and other types of display applications. The use of laser light sources in projection display systems may provide many advantageous features compared to using traditional light sources (halogen lamps, for example). Improvements may comprise higher contrast, improved colour gamut, longer life time for the light source and faster response in the rendering process itself in the display system, or situations wherein there are abrupt internal or external events reflected in the rendering process; the faster response time being due to the faster response time of the light source (i.e. laser). One of the main known technical problems in laser based projection display systems is the speckle phenomenon. Speckle appears as bright and dark irregular micro-spots apparently distributed all over the whole image surface of the display screen. The degree of the speckle intensity is usually characterized by the speckle contrast which is a measure of average value of speckle-spot-to-speckle-spot intensity fluctuations. For example, the speckle contrast C may be defined as $C = \sigma/I$ where $\sigma$ and I are the standard deviation and the mean value of the light intensity, respectively. As physical phenomena, speckle is caused by reflection of coherent light from a display screen comprising typically a small coarseness (micrometer dimensions) and/or similar surface unevenness on surfaces in the light path of the projection optics and system itself and by the subsequent human interpretation of received reflected light from the display surface and display system in an observer's eye. In a laser projection display system, the speckle phenomenon deteriorates image quality and can make the eyes of observes tired and, therefore, speckle reduction is highly desirable in prior art, ref. [1], and is probably a prerequisite to enable further use and application of laser light sources in projection display systems.

The coarseness of a screen surface and/or other surfaces in the light path may be minimised during manufacturing of the screen surface and respective optical components in the system, and thereby the speckle problem associated with this coarseness. However, in practise this is a very costly and difficult operation when manufacturing the display screen for example, which is making such display systems too costly to produce and to handle for this kind of systems and expected applications. Further, there will probably be left a certain level of coarseness which will still provide a problem with speckle spots.

Different solutions have been suggested in prior art to reduce speckle contrast in projection display systems with laser light sources. See for example reference [1, p.208]. In an example of prior art, a moving diffuser is placed in front of the screen ref. [2, 3] or between the laser light source and the spatial light modulator ref. [4]. In the other examples of prior art, two diffusers, one motionless, the other respectively moving has been suggested ref. [5].

Another example of prior art providing speckle reduction is used in a raster-scanned display system which scan a single laser spot in two respective perpendicular directions to each other over a two dimensional frame, ref. [6]. This example of prior art includes a laser beam expander, a rotating diffractive optical element (DOE) that splits the expanded beam into multiple beam-lets, and an imaging system that focuses the laser beam-lets onto a single spot on the display screen. In this example, the beam-lets comprises different uncorrelated speckle patterns that are overlapping within the same laser spot on the screen and this superimposing is providing the speckle reduction.

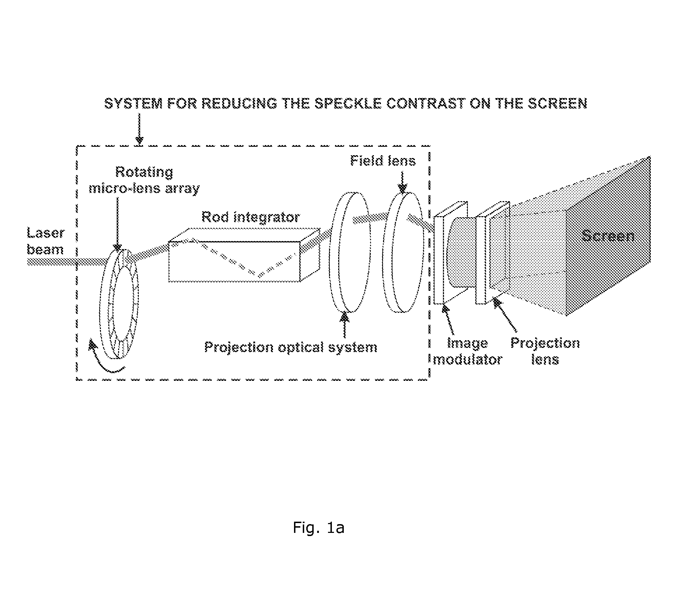

Another example of prior art comprises a rotating micro-lens array and a rod integrator, see fig. 1a and ref. [7, 8]. The rotating micro-lens array is located in front of the integrator and is varying an angle of the passing laser beam. The laser beam diameter is smaller than the aperture of a single micro-lens in the array. Thus, each single micro-lens is deflecting the entire laser beam. The rod integrator receive laser beams with varying angle and is providing uniform illumination over the output end face of the rod integrator by integrating beams in time and space. The speckle of light coming out from the integrator and which is projected onto the screen through a two-dimensional image light modulator is suppressed because different angles of the laser beam is providing different uncorrelated speckle patterns on the screen. In an observer's eye this is detected and integrated (smoothed) further.

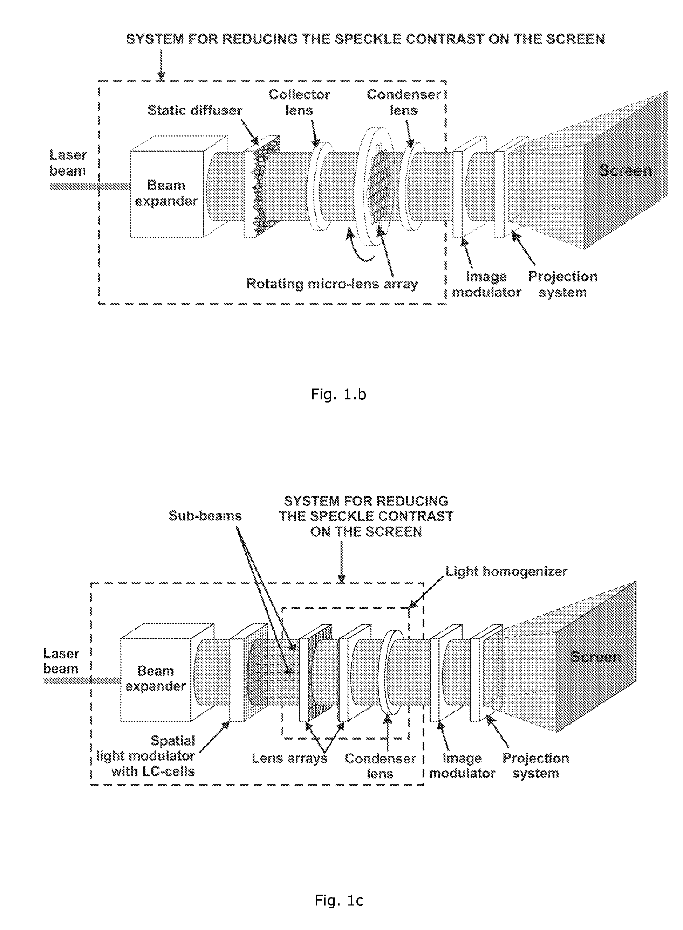

Another example of prior art system reducing speckle contrast comprises a beam expander, a static diffuser, a collector lens, a rotating micro-lens array and a condenser lens, fig. 1b ref. [10]. The diffuser introduces random phase shifts across the wave front, thus decreasing the coherence. The micro-lens array splits the light into a plurality of diverging sub-beams that rotates together with the micro-lens array. The rotation is providing an averaging in time of the random phase shifts introduced by the diffuser, thus decreasing the speckle contrast.

Another example of prior art solution for speckle reduction comprises a beam expander, a two-dimensional phase light modulator with Liquid Crystal (LC) cells, a light homogenizer in the form of one or two lens arrays and a condenser lens, fig. 1c, ref. [11]. In this example, an expanded laser beam is divided into sub-beams. The sub-beams are superimposed onto the projection plane of the screen with a certain separation angle between each of the sub-beams which is large enough to generate uncorrelated speckle patterns. For reducing the speckle contrast, the phases of the light wave of each sub-beam are for example individually changed with time in such a manner that as many as possible of uncorrelated speckle patterns are generated on the screen during the integration time of a detector (e.g. the human eye). The phase of light is modulated individually for each sub-beam. The example depicted in figure 1c illustrates a two-dimensional phase modulator with Liquid Crystal (LC) cells. However, the LC cells cannot withstand very high laser power levels and have limited lifetime because of the degradation of the liquid crystal molecules and the alignment layers, see for example ref. [12]. This kind of degradation can lead to a degradation of lamination in the LC panel and eventually to complete panel failure.

An important aspect of the speckle phenomenon is that an observer's ability to interpret the speckle phenomenon is part of the problem. In some of the prior art solutions the observer's ability to smooth out the picture is providing a sort of interpolation between speckle spots. Thereby the observer is not interpreting the speckle phenomenon as such. However, this interpretation or interpolation is related to the actual scene (motives, geometry, textures, rendering speed etc.) that is displayed and which the observer is looking at. For example, a dark background comprising speckle is less annoying than speckle in a bright foreground of an image. What elements in the image or series of images (movie) the observer actually is focusing his attention on will eventually affect the observer's impression of speckle or experienced degree of speckle contrast. Therefore, different speckle reduction methods may provide different subjective results for a same observer for the same images displayed in a system for example. Generally, it should be possible to apply different speckle reduction schemes in a display system according to how well a certain scheme functions for a certain set of images (movies etc.) for a specific viewer. Generally, a measuring of the speckle contrast should trigger a best choice of speckle reduction method for an actual displaying of a certain set of images (movies etc.).

In an example of embodiment of the present invention, the speckle contrast on a display screen is captured by a digital camera and is measured by analysing the image. Different speckle reduction schemes may be tried and evaluated for a specific image, a series of images or a movie. The speckle reduction scheme providing the lowest speckle contrast variation may then be selected.

However, speckle as a phenomenon is actually sometimes desired as an effect for improving or differentiate or highlight objects in an image being displayed. For example, letters comprising a message will catch the eye of an observer much easier if the image of the respective letters in the message comprises speckle. Then they will stand out from the background and catch the eye of an observer. This effect can be used when an alarm is displayed on a display screen, for example in an electronic road sign system, security alerts at airports etc. Therefore it is an aspect of the present invention to be able to control the degree of speckle reduction on the whole display screen, or on selected parts of a display screen.

In an example of embodiment of the present invention, an image processor identifies a certain section of an image, for example by utilizing Optical Character Recognition tools to identify letters in the image, or just as a result of user interactions, then these selected image areas are displayed overlapping with speckle onto the original image displayed without speckle. This can for example be achieved by using two respective display systems, wherein one system provides speckle on the selected parts of the image while the other system provides speckle reduction of the back ground image.

In an example of embodiment of the present invention, a speckle controlling device for use in a laser projection system comprises at least one spatial light modulator, wherein the at least one spatial light modulator comprises at least one controllable grating geometry on a surface of the at least one spatial light modulator, wherein control signals controls the grating geometry by changing the grating geometry from an inactive state to an active state, or from an active state to an inactive state dependent on a status of a specific control signal, further control signals provides a defined setting of relief depth, spatial and temporal period and orientation of the grating geometry relative to edges of the surface comprising the grating, wherein the defined setting of the defined grating geometry provides a specific speckle pattern being part of a specific speckle reduction scheme.

In another example of embodiment of the present invention, a speckle controlling device receives signals according to a specific speckle reduction scheme providing a defined setting of the grating geometry increasing the speckle in at least a part of images being projected in the projection system.

In another example of embodiment of the present invention, a speckle controlling device receives control signals that are controllably adjustable via user interface in the projection system providing a user with the option to controllably adjust control signals providing the grating geometry, thereby controllably adjusting a degree of speckle reduction or speckle increase in whole images or parts of images being projected by the projection system.

In another example of embodiment of the present invention, a speckle controlling device comprises a deformable polymer layer, wherein actuating signals provides a controllable deformation of a surface of the polymer layer, thereby providing a controllable setting of a grating geometry on the surface of the polymer layer.

In another example of embodiment of the present invention, a speckle controlling device comprises a plurality of uncorrelated speckle patterns being used one at a time, or as part of an evolving dynamic grating geometry as a function of time, wherein the respective speckle patterns are provided for by adjusting control signals as a function of time.

According to another aspect of the present invention, a system for controlling speckle in a laser projection system comprises a speckle controlling device according to the present invention.

According to another aspect of the present invention, a method for controlling speckle in a laser projection system comprises a specific speckle controlling device according to the present invention being controlled by according to a speckle reduction scheme.

In prior art, speckle reduction relies usually on one or more moving optical parts in the optical path of the display system. Moving parts in optical systems are well known, but requires a strict maintenance program as known to a person skilled in the art. Further, it is usually difficult to provide these solutions in small compact devices that can be used in mobile phones etc. Therefore, these solutions may increase the mechanical size of for example miniaturized Micro-Electro-Mechanical Systems (MEMS) based laser projectors, see ref. [9]. Other prior art methods rely on limited laser light power.

Hence, an improved method and device for speckle reduction in a laser based projection display system would be advantageous, and in particular a more efficient and/or reliable method and device for controllably reduce (or increase) speckle would be advantageous.

## OBJECT OF THE INVENTION

It is a further object of the present invention to provide an alternative to the prior art.

In particular, it may be seen as an object of the present invention to provide a method for speckle reduction and a speckle reduction device using the method providing adaption of a plurality of different speckle reduction schemes, wherein the degree of speckle reduction may be controlled, and at the same time comprises no movement of mechanical components thereby facilitating integration of the speckle reduction device into optical MEMS devices.

## SUMMARY OF THE INVENTION

Thus, the above described object and several other objects are intended to be obtained in an aspect of the invention by providing a spatial light modulator comprising a controllably deformable polymer layer, wherein deformation of the polymer light provides a static or dynamic (changing) grating providing a plurality of uncorrelated speckle patterns in the image, wherein the respective speckle patterns are superimposed upon each other and are displayed aligned with respect to each other thereby reducing or eliminating speckle in the image.

The invention is particularly, but not exclusively, advantageous for obtaining significant speckle reduction by being able to accommodate several different grating patterns related to different methods for obtaining speckle reduction.

Further, the present invention is easily integrated into existing laser display systems, wherein the speckle reduction device according to the present invention may substitute a single optical component or a plurality of other optical components encountered in the display system.

The present invention comprises also a method of utilising deformable polymer layers for adapting a grating on the surface of the polymer layer according to a specific algorithm for reducing speckle in the display system.

These and other features of the present invention are set forth in the appended claim set. Some examples of embodiments of the present invention are illustrated in the attached figures which are only provided for illustrative purposes and are not to be viewed as limiting the scope of the invention.

The individual respective aspects according to the present invention may each be combined with any of the other respective aspects. These and other aspects of the invention will be apparent from the following description with reference to the described embodiments.

## BRIEF DESCRIPTION OF THE FIGURES

Figure 1a illustrates an example of prior art.

Figure 1b illustrates another example of prior art.

Figure 1c illustrates another example of prior art.

Figure 2a illustrates an example of spatial light modulator according to the present invention.

Figure 2b illustrates another example of spatial light modulator according to the present invention.

Figure 3 illustrates an example of embodiment of the present invention.

Figure 4a, 4b, 4c and 4d illustrates an example of operating a device according to the present invention as depicted in figure 3.

Figure 5a illustrates an example of embodiment of the present invention.

Figure 5b illustrates another example of embodiment of the present invention.

Figure 6 illustrates an example of positions of rotating diffraction orders in the input plane of a light homogenizer.

Figure 7 illustrates another example of positions of rotating diffraction orders in the input plane of a light homogenizer.

Figure 8 illustrates another example of embodiment of the present invention.

Figure 9 illustrates another example of embodiment of the present invention.

Figure 10a illustrates yet another example of embodiment of the present invention.

Figure 10b illustrates the example of embodiment in fig. 10a viewed from another angle.

Figure 11 illustrates yet another example of embodiment of the present invention.

Figure 12 illustrates how other optical components may be assembled together with the example of embodiment illustrated in fig. 11.

Figure 13a and 13b illustrates examples of embodiments according to the present invention.

The individual elements of an embodiment according to the present invention may be physically, functionally and logically implemented in any suitable way such as in a single unit, in a plurality of units or as part of separate functional units. The present invention may be implemented in a single unit, or be both physically and functionally distributed between different units.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "ain" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

Some examples of prior art solutions for speckle reduction are depicted in figure 1a, 1b and 1c. Figure 1a comprises a rotating micro lens array while figure 1b illustrates a static diffuser element in combination with a rotating micro lens array while figure 1c depicts a spatial light modulator comprising a plurality of Liquid Crystal (LC) cells. As described above, the LC cells cannot withstand high laser power effects and has therefore limited use in laser display systems.

Generally, the speckle reduction is achieved when the speckle reduction system provides a plurality of superimposed and aligned uncorrelated speckle patterns in the same image that are displayed onto the display screen. The plurality of uncorrelated speckle patterns has to be provided for within the integration time of the detector (human eye).

According to an aspect of the present invention a Spatial Light Modulator with Deformable Polymer Layer (SLMDPL) may be used to generate respective uncorrelated speckle patterns using a method according to the present invention providing uncorrelated speckle patterns in reflected light reflected from the polymer surface of the SLMDPL device.

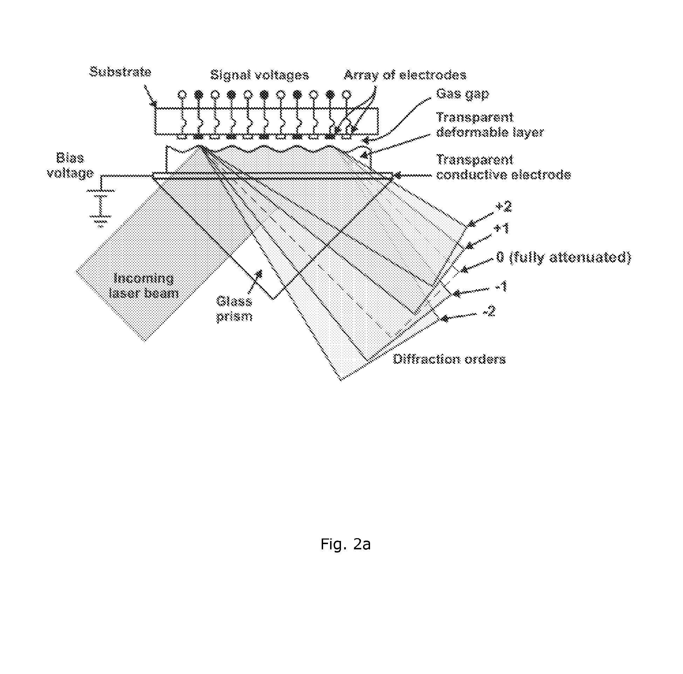

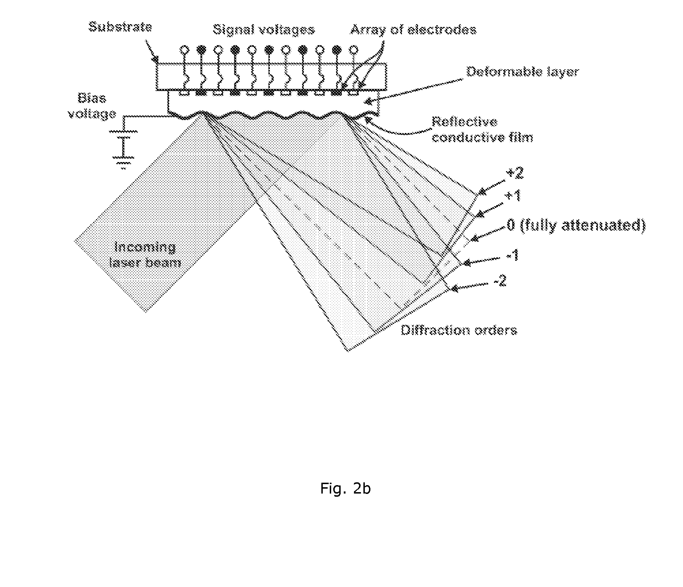

There are different types of SLMDPL devices in prior art with different actuation techniques. For example, a SLMDPL device with a cathode ray tube and actuation by charge deposition [13], a SLMDPL device with a photoconductive layer and actuation by light [14, 15], and a SLMDPL device with electric actuation by voltage signals applied on an array of electrodes placed at a certain distance from the surface of the deformable polymer layer. The latter type of SLMDPL device may be embodied in different ways, for example: an embodiment with a gas gap between the deformable layer and electrodes [16-20], as illustrated in fig. 2a, and for example with a conductive film on the surface of the deformable layer [21-28], as illustrated in fig. 2b. SLMDPL devices with voltage actuation technique are preferable embodiments according to the present invention because they are usually much easier to integrate into projection display systems. However, any type of SLMDPL device and method for controlling and providing uncorrelated speckle pattern generation in these devices is within the scope of the present invention.

A SLMDPL device with a gas gap is depicted in fig. 2a, comprising a glass prism, a conductive transparent electrode coated onto a hypothenusal face of the prism, a transparent deformable layer coated over the conductive electrode, and a substrate with an array of electrodes; the substrate is mounted onto the prism providing a parallel gas gap between the deformable layer and the array of electrodes.

A SLMDPL device with a conductive film is depicted in fig. 2b, comprising a substrate with an array of electrodes covered by a deformable layer, and a reflective conductive film on top of the surface of the deformable layer.

The physical principles of the operation of SLMDPL devices are as follows. The actuating step, for example provided for by deposited electric charge, or by light intensity distribution, or by applied voltages on electrodes as exemplified in fig.2a and fig. 2b, respectively, creates a non-uniform electric field inside the deformable layer and/or inside the gas gap. The electric field may provide stress on the surface of the deformable layer. These stresses result into a surface deformation of the polymer layer. The incoming light is reflected by the deformed surface of the polymer layer and is subject to a phase modulation which is dependent on the deformation depth (relief depth) in a certain point of the surface. There are no changes of the light intensity because the deformable layer is either transparent (fig. 2a) or reflective (Total Internal Reflection) (fig. 2b). If the electric potential distribution over electrodes is periodical (of any shape, for example, rectangular or sinusoidal) then the relief profile on the surface of the deformable layer is approximately sinusoidal with the same spatial period as the electric grating. Higher spatial harmonics of the relief profile created by, for example, rectangular potential distribution, are much smaller than the main spatial harmonics for typical parameters of the SLMDPL, see ref. [18]. Thus, the relief profile in a typical SLMDPL device can be considered as a sinusoidal phase grating. The incoming light is reflected by this grating and split into diffraction orders (fig. 2a and fig. 2b). Constant bias voltage as exemplified in fig. 2a and fig. 2b can be used to increase the depth of the surface relief, see ref. [18-20, 26-28]. Light intensity in the central (0th) diffraction order can be fully attenuated at a certain grating depth (i.e. relief depth), see ref. [29].

The main advantages of SLMDPL devices are high diffraction efficiency (>96%), short on-off time response (~1µs), linear gray-scale characteristics, low light absorption in the visual and IR range (<1%) and handling of high light power, ref. [18-20].

High temperature sustainability is due to the thermal stability of the polymer material that can be used to make the deformable layer in the SLMDPL. For example, the deformable layer can be made of silicone elastomers or polymer based on polydimethylsiloxane (PDMS), see ref. [18-20, 28]. Thermal decomposition of PDMS starts around +300°C. In experiments as disclosed in ref. [20], the polymer was exposed to the temperature +80°C for 10 days. Continuous measurements showed a constant value of the Young's modulus during all the time. Transparency of the polymer did not change either. In another experiment as disclosed in ref. [20], the SLMDPL in FIG. 2a was illuminated by 1W laser focused at spot of ≈100 µm diameter on the surface of the polymer film. No change in performance of the SLMDPL device was registered.

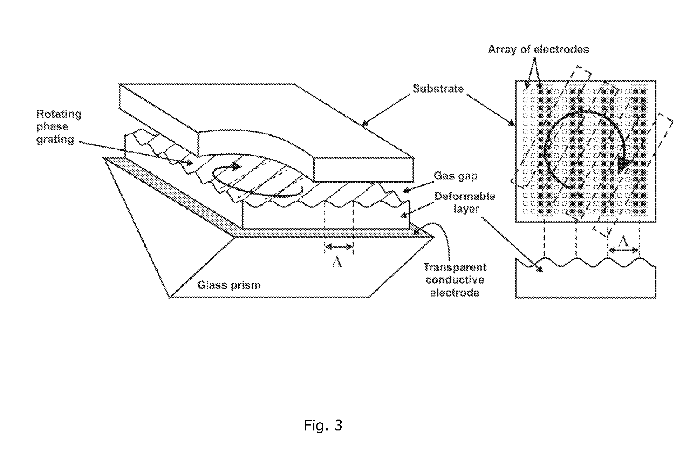

An electrode array on the substrate in the examples of SLMDPL devices according to the present invention provides a structure that allows a set of different electric gratings to be established or, in other words, different periodical distributions of electric potential in the plane of the electrodes can be provided for. In an example of embodiment of the present invention all electric gratings in a set have approximately the same spatial period but different orientation angles. When these electric gratings are provided for sequentially in the plane of the electrode array, the phase gratings with the same spatial period and different orientation angles are respectively being developed on the surface of the deformable layer. The sequence of phase gratings with orientation angles changing increasingly from 0° to 180° represents a rotating phase grating. This is illustrated in fig. 3 for a SLMDPL device with a gas gap (fig. 2a); a rotating phase grating in the other example of SMDPL device depicted in fig. 2b is provided for in the same way with the same electrode structure of the electrode array as illustrated in fig. 2a.

The phase grating in an SLMDPL device according to the present invention does not necessarily rotate continuously but may be subject to a transition from one state to another when changing an orientation angle. The structure of the relief on the surface of the deformable layer can partly lose its periodicity during the transition time between angle shifts. This effect may optionally be minimized by decreasing a step size for changing orientation angles, and also by decreasing the transition time (measured relatively to the duration of the stable state). The transition time can be decreased by using a deformable layer with a shorter response time.

According to an example of embodiment of the present invention the right hand side of fig. 3 illustrates a substrate comprising an array of electrodes. Voltages are applied onto different respective electrodes providing a distribution of the electric potential over the substrate forming a grating with spatial period $\Lambda$. This is illustrated schematically in fig. 3 with respective black and white colour filling of respective electrodes. Black colour may correspond to a certain applied voltage; white colour may indicate no voltage at all. The electrodes are bonded and/or connected to an electronic circuitry providing a controllable application of a certain voltage level and signal shape onto the respective electrodes.

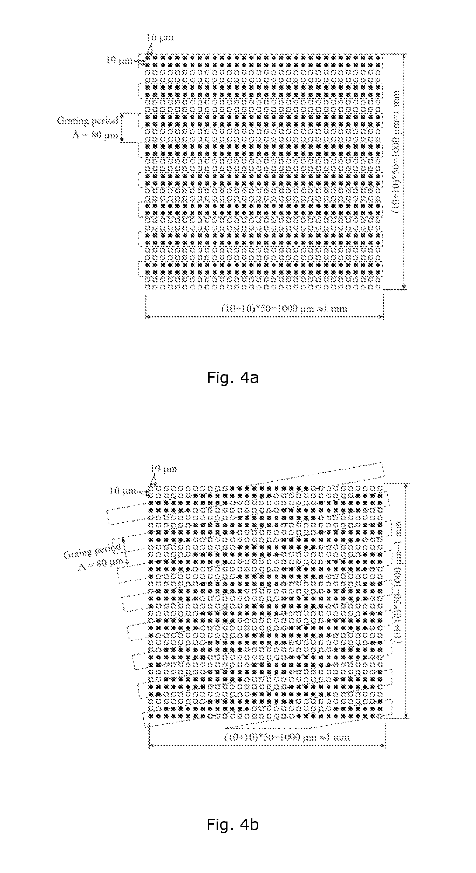

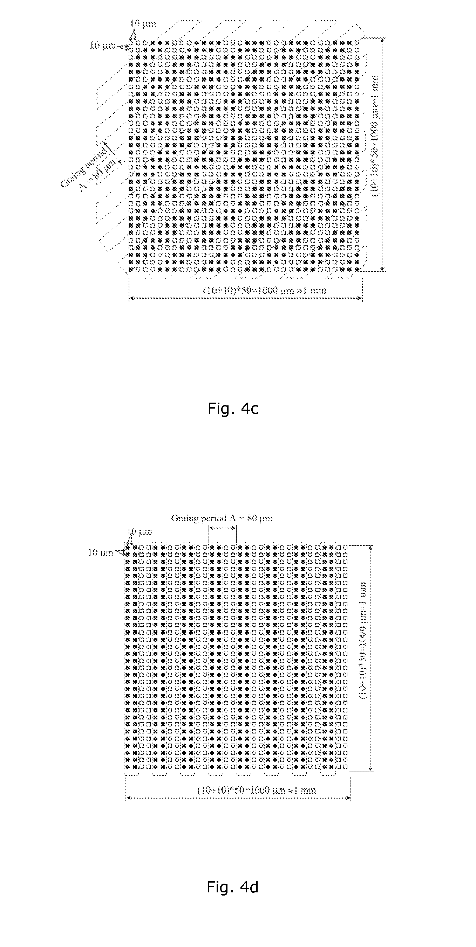

Figure 4a, 4b, 4c and 4d illustrates an example comprising respectively 0°, 10°, 40° and 90° orientations of the electric grating that can be provided for by applying a same voltage on electrodes exemplified as filled with black colour. All other angles from 0° to 170° with the 10° step can be provided for in the same way. Therefore, the total number of grating orientations with 10° rotating step is 180/10=18. Every electric grating on the substrate provides a phase grating of the relief on the surface of the deformable layer with the same spatial period A (fig. 3) according to the physical principles described above. The total number of speckle patterns N is equal to the total number of grating orientations. For $N$ =18 we obtain the maximum possible speckle reduction as:

$$K \max = \sqrt{18} \approx 4.2$$

In an example of embodiment of the present invention, a period $\Lambda$ comprises 4 electrodes as illustrated in fig. 3 and fig. 4 - two black and two white ones respectively. But the number of electrodes per period can be different and may be determined by the necessary number of grating orientations or number of speckle patterns N (ref. equation (1)) providing speckle reduction. The voltage levels (signals) applied onto respective electrodes within one period of an electric grating can also be different. The two-level voltage signal depicted in fig. 4 is rectangular. Multilevel voltage signals provides a possibility to obtain more sinusoidal distribution of the electric potential which will result into higher quality of the sinusoidal relief on the surface of the deformable layer by suppressing higher harmonics of the relief.

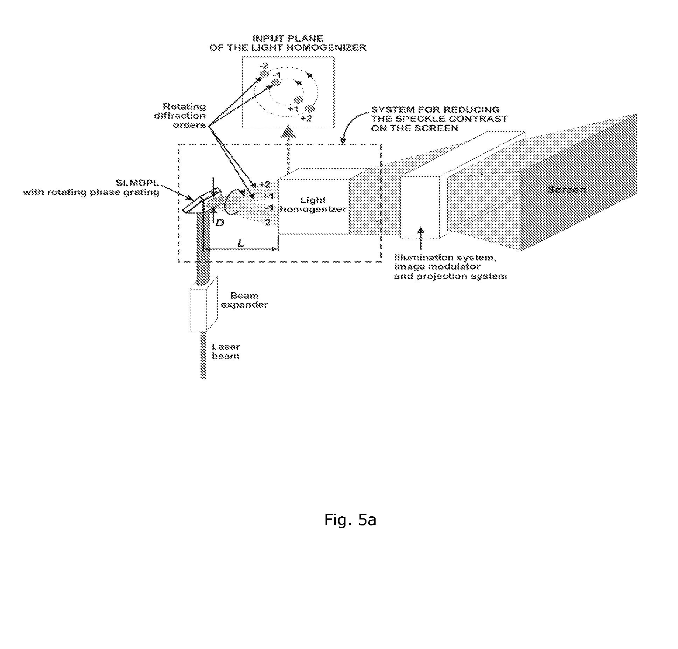

An example of embodiment according to the present invention is illustrated in fig. 5a comprising a SLMDPL device with a rotating phase grating and a light homogenizer located behind the grating (fig. 5a). The rotating phase grating is provided for by a spatial light modulator and, therefore, no mechanical movement is needed for providing the rotation. The laser light diffracted from the rotating grating is split into higher diffraction orders that rotate in space; and the central (0th) diffraction order is preferably fully attenuated. The respective diffraction orders propagate through the light homogenizer and are mixed inside the homogenizer providing a uniform light distribution at the output of the light homogenizer.

The example of embodiment of the present invention depicted in fig. 5a may provide reduction of a speckle contrast of an image on a display screen due to integration of many uncorrelated speckle patterns in the observer's eye within the integration period of the eye. These speckle patterns will arise from different orientations of the rotating grating. A coefficient for the speckle contrast reduction K can be defined as a ratio of the speckle contrast in a laser projector without, respectively with speckle reduction by a device according to the present invention. The maximal possible value for $K$ can be estimated by the formula

$$K_{\max} = \sqrt{N} \qquad\qquad (1)$$

wherein N is the number of uncorrelated speckle patterns that are integrated during an integration time $T_{\text{int}}$ of the observer's eye.

If a rotation period $T_{rot}$ of the grating is less or equal to $T_{\text{int}}$, then N can be estimated by the formula:

$$N \approx \frac{2\pi R}{d} \qquad\qquad (2)$$

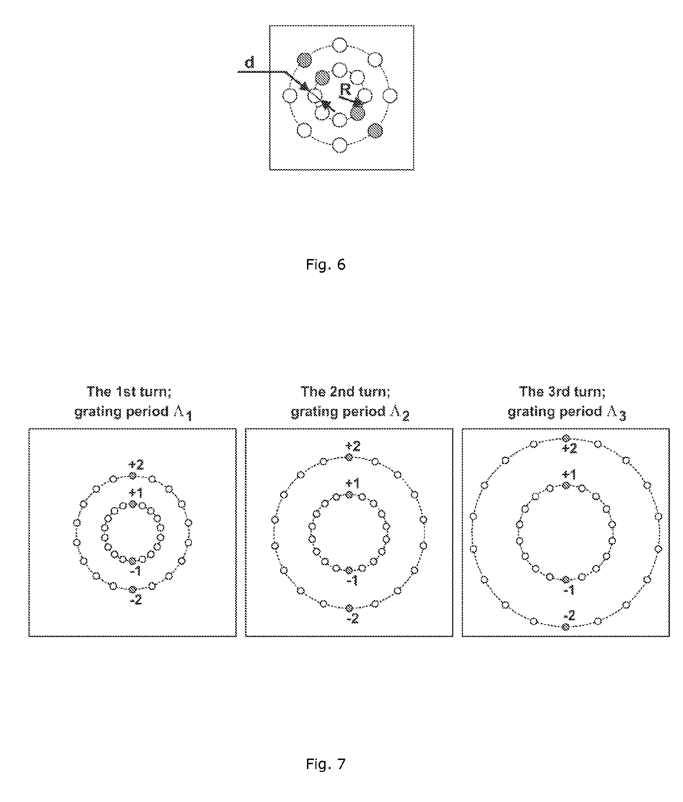

wherein R is the radius of the rotation circle for $\pm 1$ diffraction orders and d is a characteristic diameter of each respective diffraction order, ref. fig. 6. Using an approximate formula for R from ref. [35]

$$R \approx \frac{\lambda}{\Lambda} L \qquad\qquad (3)$$

and assuming that the laser beam diameter divergence is small so that $d \approx D,$ then

$$N \approx 2\pi \frac{\lambda L}{\Lambda D}, \quad K_{\max} \approx \sqrt{2\pi \frac{\lambda L}{\Lambda D}} \qquad (4)$$

where $\lambda$ is the wavelength of light, L is the distance between the rotating phase grating and the input plane of the light homogenizer and D is a diameter of the laser spot on the phase grating, ref. fig. 5a.

For example, for $\lambda$=633 nm, $L$=0.1 m, $D$=1 mm and $\Lambda$=20$\mu$m, equation (4) provides $N_{\max} \approx 20$ and $K_{\max} \approx 4.5$. If $T_{rot} > T_{\text{int}}$ then

$$N \approx 2\pi \frac{\lambda L}{\Lambda D} \cdot \frac{T_{\text{int}}}{T_{rot}} \qquad (5)$$

When $T_{rot} < T_{\text{int}}$, it is possible to increase N by changing the grating period in different turns. For example, if $T_{\text{int}} = 3 T_{rot}$ and three different grating periods $\Lambda_1, \Lambda_2, \Lambda_3$ are used in every three subsequent turns, then

$$N \approx 2\pi \frac{\lambda L}{D} \left( \frac{1}{\Lambda_1} + \frac{1}{\Lambda_2} + \frac{1}{\Lambda_3} \right) \qquad (6)$$

and $K_{\max}$ is calculated by equation (1). In this case, values of periods $\Lambda_1, \Lambda_2, \Lambda_3$ have to be chosen in such a way that $\pm 1$ diffraction orders don't overlap in the input plane of the light homogenizer, ref. fig. 7.

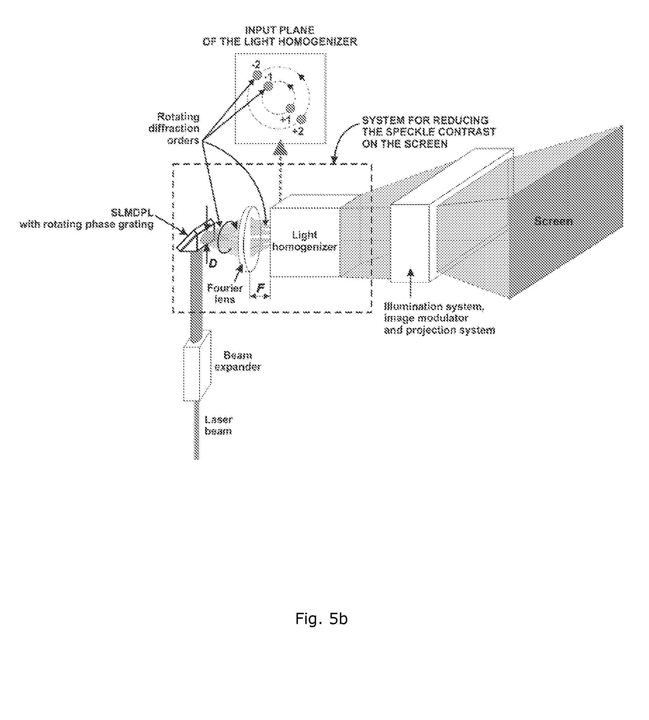

In another example of embodiment of the present invention, a lens is introduced between the SLMDPL device and the integrator, and the distance between the rotating phase grating and the integrator is equal to the focal length F of the lens, ref. fig 5b. In this embodiment, formula for R is as follows, ref. [35]:

$$R \approx \frac{\lambda}{\Lambda} F \qquad (7)$$

and the following formula for d is valid in the practical case of the small divergence of the laser beam, ref. [30]:

$$d = \frac{\lambda}{\pi D} F \qquad (8)$$

Substituting equation (7) and (8) into equation (2), then

$$N \approx \frac{2D}{\Lambda}, \quad K_{\max} \approx \sqrt{\frac{2D}{\Lambda}} \qquad (9)$$

Thus, the value of $K_{\max}$ in the system in fig.5b increases with the ratio of the laser spot diameter D to the spatial period A of the grating. For example, for D=6 mm and A=20$\mu$m, then equation (9) provides $N_{\max} \approx 600$ and $K_{\max} \approx 24.5$ which is much larger than the value obtained from equation (4) for the same values of parameters. Thus, the speckle contrast will be smaller than $1/K_{\max} \approx 4\%$ which is not recognizable by a human eye, ref. [6].

Generally, the speckle contrast reduction given by equation (9) for the system illustrated in fig. 5b is substantially larger for practically reasonable values of parameters compared to the value given by equation (4) for the system illustrated in fig. 5a.

When $T_{rot} < T_{int}$, it is possible to increase N by changing the grating period in different turns. For example, if $T_{int} = 3T_{rot}$ and three different grating periods $\Lambda_1, \Lambda_2, \Lambda_3$ are used in every three subsequent turns, then

$$N \approx \frac{2\pi\,D}{\Lambda_1} + \frac{2\pi\,D}{\Lambda_2} + \frac{2\pi\,D}{\Lambda_3} \qquad (10)$$

and $K_{max}$ is calculated by equation (1). In this case, values of periods $\Lambda_1, \Lambda_2, \Lambda_3$ have to be chosen in such a way that $\pm1$ diffraction orders don't overlap in the input plane of the light homogenizer, ref. fig. 7.

The 0th diffraction order in both examples of embodiments depicted in fig.5a and fig.5b respectively is preferably completely attenuated because it does not change direction when the phase grating rotates and, therefore, will increase correlation between speckle patterns for different orientations of the grating. The parameter $K_{max}$ will be smaller than the value given by equation (1) if the 0th diffraction order is not being attenuated.

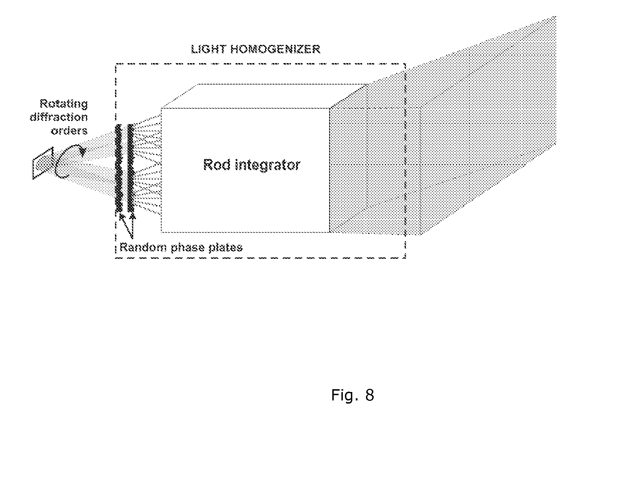

The light homogenizer can be realized as known to a person skilled in the art. For example, it can be made as a bundle of glass fibres (ref. [31]) or as a rod integrator (ref. [8, 32]) or it can include a rod integrator and one or several random phase plates in front of it, see fig. 8. The random phase plate is made as known to a person skilled in the art, and has almost no absorption of the passing light but provides only changes of phases randomly across the aperture. Another embodiment of the light homogenizer includes one or several micro lens arrays and a Fourier lens (ref. [33, 34]).

Random Phase Plates (RPP) improves efficiency of the light homogenizer by spreading light from diffraction orders over the entire input end face of the rod integrator. If the integrator has a smooth reflective internal surface and there is no RPPs, the laser beam passing through the rod integrator will not be expanded but will remain as a narrow beam. However, RPPs as illustrated in fig.8 can be in principle be omitted if the internal surface of the rod integrator has some coarseness.

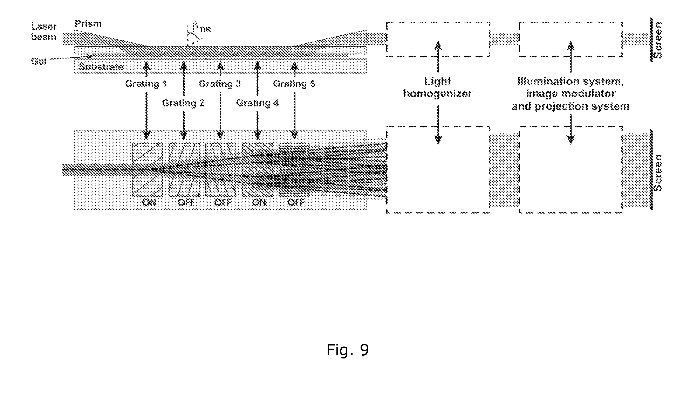

Figure 9 illustrates another example of embodiment of the present invention. In this example of embodiment five different gratings are all arranged in line, one grating after the other. Orientation angles are preferably different for all gratings. Distances between gratings and their orientation angles are preferably made different for all gratings. These distances and angles are chosen so that the diffraction orders in the input plane of the light homogenizer do not overlap for different combinations of actuated and non-actuated gratings.

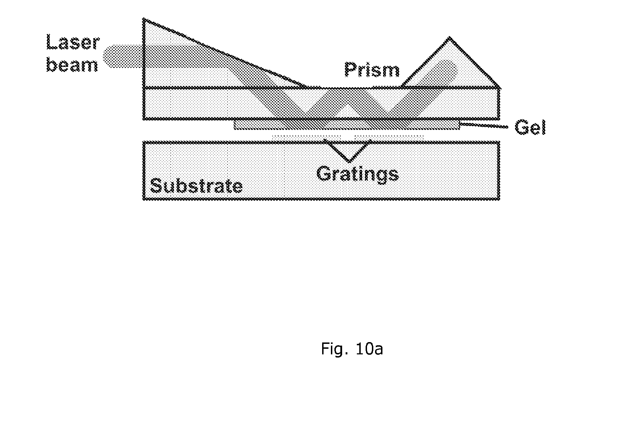

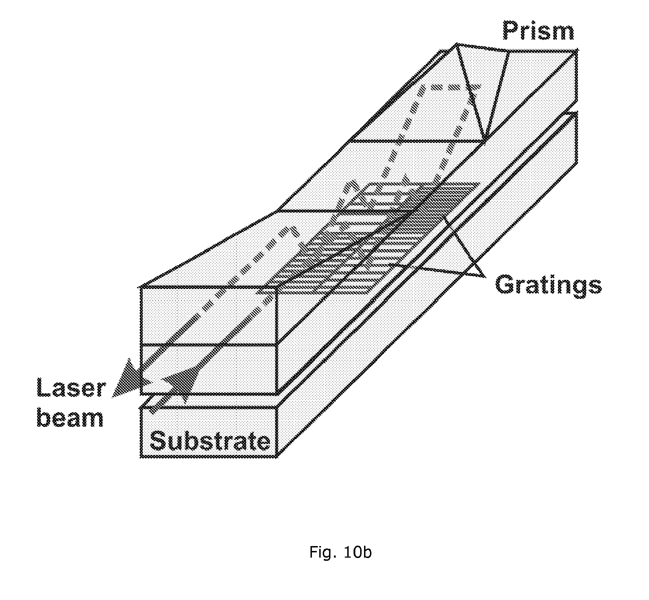

In order to minimize the size of an SLMDPL in an example of embodiment as illustrated in figure 9, the gratings on the substrate can be arranged in two or a plurality of rows and a prism can also be designed to let the light propagate forth and back inside the prism and undergo diffraction from all the gratings. An example of embodiment according to this principle is illustrated in figure 10a depicting a side view while figure 10b depicts a perspective view of this example of embodiment. This example of embodiment comprises a 2x2 array of gratings.

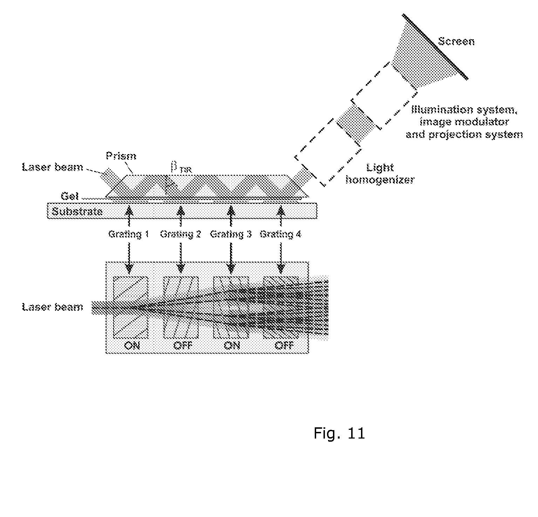

Figure 11 illustrates an embodiment according to the present invention comprising four gratings in a row wherein each grating controllably can be switched on or off by for example applying a correct voltage on the respective electrodes of each grating. In these examples of embodiment according to the present invention, the electrode structure can be fixed for a certain orientation of the grating. Therefore, each respective grating is fixed but can be turned on or off. This makes it possible to make combinations of on or off gratings providing the necessary number of different uncorrelated speckle patterns. In the example illustrated in figure 11, there are four gratings that receive light via a prism located above the gratings.

For M phase gratings, there are $2^M$ possible combinations of actuated and non-actuated gratings and, therefore, N = $2^M$ speckle patterns. If these speckle patterns are uncorrelated, the speckle contrast reduction will be maximal and equal to $1/\sqrt{2^M}$ ref. [1]. For example, for 3 gratings the following $2^3=8$ combinations are possible:

Table 1:

|  | 1 | 2 | 3 | 4 | 5 | 6 | 7 | 8 |
|---|---|---|---|---|---|---|---|---|
| Grating #1 | OFF | ON | OFF | ON | OFF | ON | OFF | ON |
| Grating #2 | OFF | OFF | ON | ON | OFF | OFF | ON | ON |
| Grating #3 | OFF | OFF | OFF | OFF | ON | ON | ON | ON |

Total Internal Reflection (TIR) may be provided for in the device.

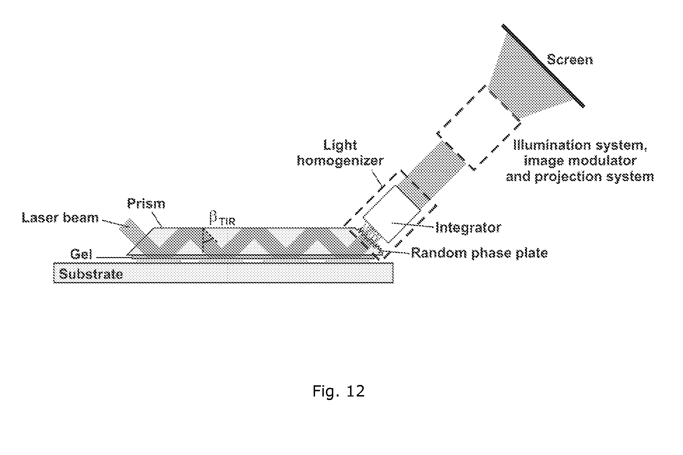

However, even though the electrode structure is fixed in this example of embodiment it is also within the scope of the present invention to make each of the respective electrode structures in a row of gratings as generally programmable electric gratings. In this manner it is possible in this example of embodiment as depicted in figure 11 and 12 to support any scheme for generating uncorrelated speckle patterns.

Figure 12 illustrates an example of embodiment of a device according to the present invention comprising further elements providing functions of the optical system in the design. The incident light is passing a prism surface facing towards a light inputting side of the device. The prism guides the light back and forth through the design providing incident light onto the respective gratings before the light leaves the device through an output surface on the prism. In this example of embodiment the output surface is made rough thereby providing functionality corresponding to a random phase plate.

The examples of embodiments depicted in figure 9, figure 10a and 10b, figure 11, figure 12 and figure 13 are preferably using a SLMPDL comprising a gel in combination with a specific electrode structure. Switching of a grating on or off is then accomplished by turning a voltage on or off on the electrode structure. However, in these examples of embodiments it is within the scope of the present invention to use other types of gratings, for example a substrate with an etched grating. The only requirement for obtaining speckle reduction is to be able to provide uncorrelated speckle patterns which are provided for by the combinations of gratings that are on or off, for example as depicted in figure 11. Therefore, the turning of the grating on or off when manufactured as an etching of a substrate surface, may be accomplished by arranging a shutter device above the grating surface. For example, a LCD shutter or a MEMS shutter or equivalent shutter as known to a person skilled in the art may be used. When the grating has to be turned on the shutter is open. When the grating has to be turned off the shutter is closed. The surface of the shutter facing towards the incoming laser light may be reflective.

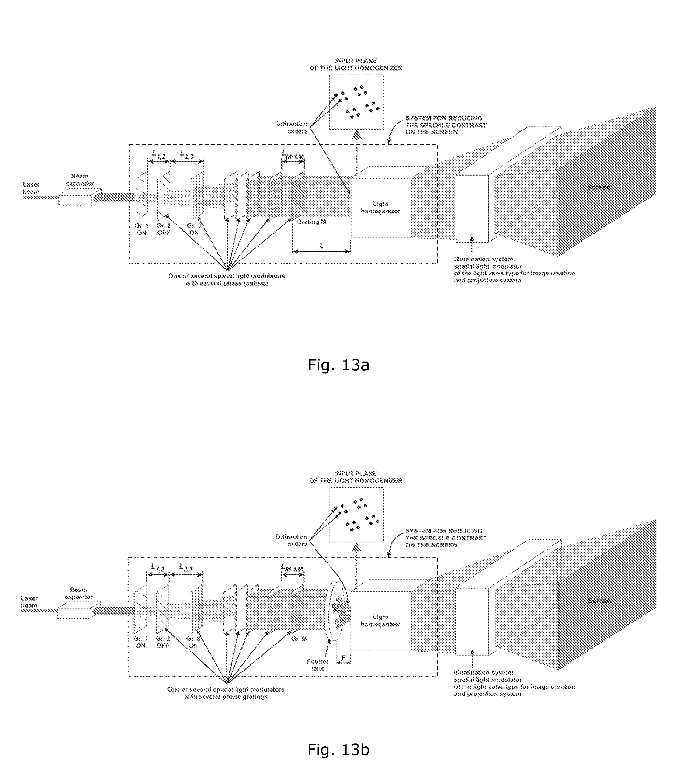

Figure 13a and 13b illustrates examples of display systems using one or a plurality of SLMDPL devices according to the present invention. In figure 13a a single modulator or a plurality of spatial light modulators with respective gratings provides the uncorrelated speckle patterns. The laser beam is expanded in a beam expander before the laser light hits the spatial light modulator(s). Then the light passes a light homogenizer before passing an illumination system, for example a light modulator creating the image in the projection system, as known to a person skilled in the art. In figure 13b there is also a Fourier Lens inserted before the Light homogenizer section which may simplify and improve the light homogenizer function.

According to another aspect of the present invention, the ability of controllably adapt a surface of a SLMDPL device to a certain pattern implies that any speckle reduction scheme may be used in a speckle reduction system according to the present invention. The number of electrodes provides a practical limitation of the number of possibilities. However, modern fabrication methods of electronic circuitry may be applied when manufacturing these devices and therefore there are in principle, for all practical reasons, no upper limits on the number of different speckle patterns that can be achieved with a device according to the present invention. It is also within the scope of the present invention to provide different shapes of electrodes and/or electrode structures to accommodate different speckle patterns.

The only requirement is that each respective speckle pattern is uncorrelated with the other respective speckle patterns, and also that the system can provide uncorrelated speckle patterns within the integration time of the detector (a human eye).

An embodiment of a device according to the present invention may comprise any form of electrode structure that can be programmed by applying respective voltages onto the electrodes which may provide a certain grating structure. As described above it is possible to program a moving grating on a gel surface in some examples of embodiment according to the present invention. Generally, the ability to adapt the grating of a preferable device according to the present invention to any desired form, either static or dynamic or as a combination of these, provides unlimited possibilities of generating different uncorrelated speckle patterns.

As a consequence of this programming ability of the grating, a device according to the present invention may also controllably reduce or increase a speckle phenomenon in the display system. This ability may be used to amplify certain images that are to be displayed, for example letters in an alarm message. In such circumstances it is necessary to catch the attention of an observer as quickly as possible. Letters with speckle will catch the attention of an observer.

Sometimes an image or a movie may look better with some speckle present in the image. As outlined above, such effects may be subjective user preferences. Therefore, it is within the scope of the present invention to be able to have user control of the level of speckle reduction. For example, a switch or a computer interface may provide a choice for adjusting the degree of speckle reduction. The user interaction may result in a change of grating patterns or less attenuation of the $0^{th}$ diffraction order, for example. A controller controlling the applied voltage levels and signal shape applied onto the respective electrodes may react to a switch setting, or commands submitted via a computer display window providing a user interface to the system, thereby enabling an adjustment of relief depth, period and orientation of grid geometries on the surface of for example a SLMPD device according to the present invention.

Sometimes, as with the example of an alarm, it is required that only a part of an image comprises speckle, for example letters of an alarm message being displayed. In an example of embodiment of the present invention, an image processor may for example utilize Optical Character Recognition methods to identify letters in an image. As known to a person skilled in the art, a program can then identify the borders or edges of the respective letters. These letters can then be cut out of the image and then be displayed via an imaging system without any form of speckle reduction, or via a system providing amplified speckle. The rest of the image (or the complete image) is displayed through another system comprising speckle reduction according to the present invention. The image with letters and speckle and the image with speckle reduction is then combined and aligned before being displayed onto the display screen of the system.

Yet another example of embodiment of the present invention comprises for example a digital camera that can capture an image of the display screen (or a series of pictures if necessary) and then measure and calculate the speckle contrast C by analysing the image. The variation from pixel to pixel of the light intensity may be used to identify speckle spots, and by measuring the variation from speckle spot to speckle spot the intensity fluctuation can be identified. If necessary a series of pictures can be used to obtain a statistical mean value of the speckle contrast C, thereby improving the quality of the measurements and calculations. Different speckle reduction schemes may be tried and evaluated for a specific image, a series of images or a movie. The speckle reduction scheme providing the lowest speckle contrast variation may then be selected automatically, or a user is prompted to do a selection via for example a graphical user interface on a computer system connected to the speckle reduction system.

Generally, the uncorrelated patterns are generated by manipulating the depth of the relief, the period of the grating and the orientation of the grating relative to the image surface or relief surface edges. These manipulations can be achieved in a single device according to the present invention as depicted for example in figure 5a and 5b, or in a device as depicted for example in figure 9. In examples of embodiments the depth (constant bias for example) and period of the grating may be constant while only the orientation is changed (for example by rotating the orientation of the grid). The choice of modulation technique is related to the mathematical basis providing exemplars of uncorrelated patterns.

When a set of uncorrelated patterns, or a single pattern, has been decided to be part of a particular speckle reduction scheme it is possible to incorporate these speckle reduction patterns in an embodiment of the present invention by translating a setting of modulation in a light modulator incorporated in the speckle reduction device by providing control signal settings of the grid parameters (i.e. relief depth, period, and orientation) for each respective grid providing these respective patterns.

It is for example possible to provide a simulator of speckle reduction schemes, wherein different settings of respective grid parameters for a specific device according to the present invention can be systematically tested, interpolated, incremented, decremented etc., and then by comparing simulated resulting speckle patterns of each iterated setting of parameters with a specific defined speckle pattern that has been decided to be used in the device, it is possible to derive parameter settings for the modulation providing a speckle pattern close to or equal to the desired pattern(s). The simulator may comprise a mathematical model of the device for reducing the speckle, and parameter settings may be calculated directly, or the calculations provided for by the model may be used as input in an iterative process for finding parameter settings as described above.

The grid parameters may then be converted into for example control signals for a device as depicted in figure 5a or 5b, wherein amplitude of the signal, period of the signal for each respective electrode is calculated, wherein the calculation takes into account the orientation of the grid with respect to the image surface or relief surface edges, thereby identifying which electrode should receive which signal with respective period and amplitude.

When a device as depicted in figure 9 is used, the grid parameters may be transferred and implemented as etching of a grid pattern on a substrate surface, or as signals that is to be applied onto electrodes corresponding to the grid pattern of each respective sub grid (ref. fig. 9). If the grid in an embodiment as exemplified in figure 9 is of a programmable type, the respective grid parameters of the corresponding modulator will then be calculated and converted to signals applied onto electrodes of the respective modulators providing the respective grids, as described above.

In an example of embodiment of the present invention, the step of selecting a specific speckle reduction scheme may be a user selecting a specific scheme among several respective choices of algorithms listed on a computer display (i.e. speckle patterns). When a choice has been made the actual operation of the speckle reduction scheme is then to operate the speckle reduction device according to the present invention by applying respective different voltages (signals) on respective different electrodes, or by turning on or off respective gratings (on or off signalling), thereby providing a plurality of uncorrelated speckle patterns that are superimposed onto each other and which are also aligned relative to each other by other parts of the projection system. The different voltages or commands for turning gratings on or off or providing a specific grating pattern (static or dynamic) may be stored and indexed in a computer memory accessible by a controller providing for example a user interface to the system, or an Application Program Interface (API).

The example of user interface or API providing access to the indexed table may trigger outputting of single values or a series of values dependent on the nature of the speckle pattern, i.e. static or dynamic patterns. It is also within the scope of the present invention to let a projection system do an automatic selection, either via a default setting or as a result of a measurement of the speckle contrast for example as described above. However, whenever a certain indexed speckle reduction scheme is selected, the index (number or address) of this particular scheme is used to address the computer memory, for example identified as a memory section called the signalling definition memory, comprising the different settings which then are read out from the memory and applied onto respective electrodes in a connected SLMPDL device, respective shutter devices etc. dependent on type of speckle reduction device that is actually in use. As known to a person skilled in the art, the connection to the respective electrodes of a connected device may comprise signal conditioning circuitry comprising both passive and/or active analogue electronics as well as digitally controllably circuitry providing correct signalling to the respective electrodes dependent on the input signals.

The process of converting outputted values from the signalling definition memory comprising binary coded signal values to physical signals that have specific amplitude and period (and also a specific duration of the signal) may be accomplished as known to a person skilled in the art. For example, a Voltage Controlled Oscillator (VCO) can be in communication with the signalling definition memory output, and whenever a binary coded value is transferred from the signalling definition memory output to digital control inputs of the VCO, the VCO generates an analogue output signal of a specific amplitude and frequency defined by or given by the binary input value. The binary input value may comprise two sections, one comprising the amplitude level, the other the frequency. If a specific VCO circuitry is controlled by analogue signal levels a Digital to Analogue Converter (DAC) may be inserted in between the memory output and the VCO circuitry input terminals. The duration of the VCO output signal may be controlled by a digital enabling signal. When the enabling signal is "on", the VCO outputs a signal. When the enabling signal is "off", the VCO outputs no signal. However, it is within the scope of the present invention to use any type of circuitry that can provide the correct signals on the electrodes.

Therefore it is possible to design a grid pattern that is changing appearance as a function of time, for example in a device as depicted for example in figure 4a to 4d by translating an uncorrelated speckle pattern to be used in a scheme into binary values used for a specific VCO circuitry, wherein output signals from VCOs thereby generates a plurality of grids providing the uncorrelated speckle patterns, and wherein these binary values are changed as a function of time. The translation of a binary value to a specific amplitude and frequency of an output signal is provided for by the signal data specific for the specific VCO circuit that is being used in the speckle reduction system.

The signalling definition memory may be organized to map the electrode patterns of the SLMPDL device in use. For example, each row of electrodes as depicted for example in figure 4a to 4d is mapped to a respective word in the signalling definition memory. The phrase "word" in this context is a collection of bits being arbitraty long, i.e. comprising enough bits to reflect the number of electrodes in a row corresponding to this word. The word corresponding to each electrode row is then divided into subgroups of bits representing the respective electrode positions in this particular row of the grid. Each subgroup in every word may then be uploaded with binary values representing the amplitude and frequency of each respective electrode providing the grid pattern on the surface of the gel. The uploading can for example be performed by an example of simulator as described above, wherein the simulator organizes the outputting of signals as a series of words corresponding to the organization of the electrodes in rows.

If the grating geometry is not changed, for example as a function of time, but the grating is switched "on" or "off" during the integration time the speckle reduction system may only need to read out all words from a signalling definition memory as exemplified above. The read out of all the words may be accomplished within the integration time of the detector (the observer's eye). If this is not possible due to the amount of data, a buffering of the data from the signalling definition memory may be used for intermediate storage as known to a person skilled in the art, thereby making it possible to read out all necessary data before they actually are applied onto the respective electrodes. If the projection system is displaying for example a movie, the updating of the intermediate storage should be accomplished within the time used to change from one picture frame to a next picture frame.

If the speckle reduction scheme comprises a dynamic grating, as exemplified in figure 4a to 4d, a more elaborate control scheme may be used. With reference to figure 4a to 4d it is obvious that each figure represent a time dependent snapshot of the setting of each respective electrode. If the dynamic grid pattern is as depicted in these figures, the amplitude and frequency has the same values independent of which point in time they are used. In this case it is only necessary to for example control the activation by submitting an "on" of "off" signal to each respective electrode. An additional memory, for example denoted enabling signal memory may comprise an image of "on" or respective "off" electrodes for each respective point in time. For example, if the evolution in time of the grid in the time domain is as depicted in figure 4a to 4d, each respective figure represent then snapshots in time of the grid configuration on these specific points in time.

This dynamic grid pattern is then applied onto the electrodes by enabling the section of the signalling definition memory corresponding to this particular speckle reduction scheme which results in outputting a setting of amplitude and frequency of all specific electrodes in a row in the grating, while the enabling signal memory section, also enabled by the specific choice of speckle reduction scheme, comprising the snapshot images of the electrode settings are outputted one word at a time thereby enabling each respective VCO circuitry in all rows as described above as a function of time. The outputting of the signal definition values and values of the enabling signal images may be accomplished within the integration time of the detector (human eye). If this is not possible due to for example the amount of data, buffering of signals may be used as described above.

In a situation where the amplitude and frequency of signals also changes with time, a plurality of signal definition sections may be downloaded, wherein each downloaded section represent a snapshot in time of signal definition settings of each respective electrode. When the speckle reduction system reads out the different images stored in both the signalling definition memory and the enabling signal memory, the respective images will each be kept active in the system within the integration time of the detector (human eye). If this is not possible a buffering of signals may be used as described above.

In an example of embodiment of the present invention, a signalling definition memory and/or enabling signal memory may be organized as a memory with pages. Each page represents a snapshot in time while each word in the page represents a row in the grid while groups of individual bits in words represent settings of each respective electrode in each respective row of the grid. An address of the memory system may be organized such that a group of the most significant bits in the address point to a page in the memory while the other bits are address bits for the words inside a page.

According to another aspect of the present invention, the controlling circuitry, memory sections, signal conditioning circuitry etc. may be integrated into a substrate being part of a speckle reduction device according to the present invention. Signal conditioning circuitry may then be an interface for signals from controlling circuitry and/or memory sections or memory pages thereby providing correct setting of specific electrodes according to a specific speckle reduction pattern or patterns.

According to another aspect of the present invention, control signals for controllably forming gratings on a surface of a polymer layer may also be used to provide an "on" state or an "off" state simply by refraining from applying the signals providing the grating when the state should be "off", and apply the signals when the state should be "on". All possible signalling schemes that can provide an "on" state, "off" state and a specific grating geometry are within the scope of the present invention. Any method, device and system providing the same respective signalling conditions are within the scope of the present invention.

According to another aspect of the present invention, a method for providing a specific speckle pattern comprises:

identifying desired relief depth or depths, spatial and temporal period or periods and orientation or orientations of a grating in the speckle controlling device providing a specific speckle pattern or patterns,

converting the identified relief depth or depths of the grating into corresponding voltage amplitudes for control signals to be applied onto a plurality of signal input terminals of the specific speckle controlling device,

converting the spatial and temporal period or periods of the grid into frequencies of the signals applied onto the plurality of signal input terminals of the specific speckle controlling device,

identifying the orientation or orientations of the grating relative to an orientation of an image projection surface in the display system, or relative to a surface comprising the grating, and converting this orientation or orientations of the grating into a pattern of respective "on" and "off" signals applied on input terminals,

applying the signals with the identified voltage amplitude and frequency onto the respective identified "on" signal input terminals thereby providing a grating on the reflective surface of the specific speckle controlling device.

According to yet another example of embodiment of a method according to the present invention, a step comprises further identifying a time dependent series of specific uncorrelated speckle patterns.

REFERENCES

[1] J.W.Goodman, "Speckle Phenomena in Optics", Roberts and Company Publishers, Greenwood Village, 2006.

[2] A.W.Lohmann, "Image Formation and Multiplicative Noise", J. Opt. Soc. Am., 55, 1030-1031 (1965).

[3] C.E.Hauber and R.E. Kittredge, US Patent No. 3473862 "Optical Screen Orbital Movement System", 1969.

[4] B.E.Kruschwitz, A.F.Kurtz, US Patent No. 6594090 "Laser projection display system", 2001.

[5] S.Lowenthal and D.Joveux, "Speckle Removal by a Slowly Moving Diffuser associated with a Motionless Diffuser", J. Opt. Soc. Am., 61, 847-851 (1971).

[6] L.Wang et al. "Speckle reduction in laser projection systems by diffractive optical elements", Applied Optics, Vol. 37, No. 10, 1770-1775 (1998).

[7] T.Mizushima, K.Kasazumi et al., "Laser Projection Display with Low Electric Consumption and Wide Color Gamut by Using Efficient Green SHG Laser and New Illumination Optics", SID 06 DIGEST, 1681-1684 (2006).

[8] K.Kasazumi, US Patent Application No. 20080165401 "Two Dimensional Image Forming Device", 2006.

[9] M.Scholles et al., Recent advancements in system design for miniaturized MEMS-based laser projectors", Proc. of SPIE, Vol. 6911, 69110U (2008).

[10] A.Shalapenok, I.Hurevich, D.Velikov, J.Ritter, A.Shkolnik, US Patent No. 6081381 "Apparatus and method for reducing spatial coherence and for improving uniformity of a light beam emitted from a coherent light source", 1998.

[11] M.Kamm, O.Ripoll, US Patent Application No. 20080204847 "Image generation unit and method to use an image generation unit", 2008.

[12] Study of Texas Instruments and the Munsell Color Science Laboratory "Reliability of HTPS Panels Questioned," 2003 http://www.insightmedia.info/news/ReliabilityofHTPSPanelsQuestioned-2.htm

[13] F.Mast et al., "Cathode ray tube", US Patent No. 3835346, 1974.

[14] F.Mast et al., "Arrangement for amplifying the light intensity of an optically projected image", US Patent No. 2896507, 1959.

[15] N.Sheridon, "Cycling recording system by the use of an elastomer in an electric field", US Patent No. 3716359, 1973.

[16] Y.Guscho, US Patent No. 7414768 "Electro-optical transducer and jelly layer therefore, method for producing a jelly layer and a compound for carrying out said method", 2008.

[17] A.Malthe-Sørenssen, E.Zimmer, T.Natestad, B.Jacobson, US Patent No. 6897995 "Method and device for variable optical attenuator", 2005.

[18] Y.Guscho, "Physics of reliefography", Nauka, Moscow, 1992 (in Russian).

[19] Y.Gushcho, V.Kartashov, "Electrical charge moving in the Reliefography Spatial Light Modulator", Photonics and Optoelectronics , Allerton Press Inc., New York, Vol. 2, No. 2, 71-77 (1994). http://www.worldcat.org/oclc/27261344?pgload=backtoitem http://www.publist.com/search/show.asp?PLID=157350

[20] V. Kartashov, L. Henriksen, J. H. Ulvensøen, B. Svardal, T. Svortdal, R. Berglind, and G. Hedin, "Image improvement in a laser projection display with a spatial light modulator with a deformable polymer",Journal of the Society for Information Display, Volume 17, Issue 7, July 2009, pp. 581-587.

[21] W.Glenn "Display using array of charge storage devices", US Patent No. 3882271, 1975.

[22] W.Glenn "Method of making deformable light modulator structure", US Patent No. 4529620, 1985.

[23] W.Glenn "Solid state light modulator structure", US Patent No. 4626920, 1986.

[24] U.Srinivasan, et al. "Optical modulator with a traveling surface relief pattern", US Patent No. 7054054, 2006.

[25] U.Srinivasan, et al. "Configurable grating based on surface relief pattern for use as a variable optical attenuator", US Patent No. 6930817, 2005.

[26] R.Tepe, R.Gerhard-Multhaupt, W.Brinker, W.-D.Molzow "Viscoelastic spatial light modulator with active matrix addressing", Appl. Optics, Vol. 28, No. 22, 4826-4834 (1989).

EP 2 322 957 A1

[27] W.Brinker, R.Gerhard-Multhaupt, W.-D.Molzow, R.Tepe "Deformation behaviour of thin viscoelastic layers used in an active-matrix addressed spatial light modulator," Proc. SPIE, Vol. 1018, 79-85 (1988).

[28] W.Brinker et al. "Metallized viscoelastic control layers for light-valve projection displays", Displays, Vol. 16, No. 1, 13-20 (1995).

[29] J.W.Goodman, "Introduction to Fourier Optics", McGraw-Hill, New York, 1968.

[30] B.E.A.Saleh, M.C.Teich "Photonics," John Wiley & Sons, Inc.; 1991.

[31] S.Russell, G.Imthurn "Fiber bundle homogenizer and method utilizing same", US Patent 4932747, 1990.

[32] S.Kawaai, K.Ohgaki, US Patent No. 6915063 Rod integrator manufacturing method and rod integrator, 2003.

[33] For example, light homogenizers manufactured by SUSS MicroOptics SA, http://www.suss-microoptics.com/solutions/beam homogenizing.html; http://www.sussmicrooptics.com/downloads/SMO TechInfo Sheet 10.pdf

[34] A.Morikawa, K.Kasazumi, K.Mizuuchi, US Patent No. 7399084 "Laser image display apparatus", 2005.

[35] J. W. Goodman "Introduction to Fourier Optics, Roberts & Company Publishers, 3rd edition, 2004.

**Claims**

1. A speckle controlling device for use in a laser projection system comprising at least one spatial light modulator, **characterized in that** the at least one spatial light modulator comprises at least one controllable grating geometry on a surface of the at least one spatial light modulator, wherein control signals controls the grating geometry by changing the grating geometry from an inactive state to an active state, or from an active state to an inactive state dependent on a status of at least one specific control signal, the control signals provides a defined setting of relief depth, period and orientation of the grating geometry relative to edges of the surface comprising the grating, wherein the defined setting of the defined grating geometry provides a specific speckle pattern being part of a specific speckle reduction scheme.

2. The speckle controlling device according to claim 1, wherein the control signals according to a specific speckle reduction scheme is providing a defined setting of the grating geometry increasing the speckle in at least a part of images being projected in the projection system.

3. The speckle controlling device according to claim 1 or 2, wherein the control signals are controllably adjustable via a user interface in the projection system providing a user with the option to controllably adjust control signals providing the grating geometry, thereby controllably adjusting a degree of speckle reduction or speckle increase in whole images or parts of images being projected by the projection system.

4. The speckle controlling device according to claim 1, wherein the at least on spatial light modulator comprises a deformable polymer layer, wherein actuating signals provides a controllable deformation of a surface of the polymer layer, thereby providing a controllable setting of a grating geometry on the surface of the polymer layer.

5. The speckle controlling device according to claim 1, wherein the speckle reduction scheme comprises a plurality of uncorrelated speckle patterns being used one at a time, or as part of an evolving dynamic grating geometry as a function of time, wherein the respective grating geometries corresponding to the respective speckle patterns are provided for by adjusting the control signals of the speckle controlling device as a function of time.

6. The speckle controlling device according to claim 5, wherein the speckle reduction scheme comprises a series of control signal definitions derived from a simulation of different uncorrelated speckle patterns.

7. The speckle controlling device according to claim 1, wherein the control signals provides a defined setting of the grating geometry providing a substantial attenuation of $0^{th}$ diffraction order.

8. The speckle controlling device according to claim 1, wherein respective grating geometries according to a specific speckle reduction scheme is provided for by a series of etchings on a surface of a substrate, wherein each respective grating is impinged by incident laser light one after the other, each respective impingement provides an uncorrelated speckle pattern in outgoing reflected laser light, wherein control signals controllably can activate respectively deactivate each respective grating.

9. The speckle controlling device according to claim 8, wherein the respective grating geometries according to the specific speckle reduction scheme are provided for as a series of gratings on a series of controllable deformable polymer layer surfaces.

10. The speckle controlling device according to claim 8 or 9, wherein distances between respective gratings and respective orientation angles of respective gratings are made different from each other.

11. A system for controlling speckle in a laser projection system, **characterized in that** the system comprises a speckle controlling device according to any claim 1 to 10.

12. The system according to claim 11, further comprising a measurement device measuring speckle contrast variations in an image projected by the system.

13. The system according to claim 11, wherein the measured speckle contrast variation is used to select a specific speckle reduction scheme, either by a user selection via a user interface, or automatically by the system according to a level of the speckle contrast variation.

14. The system according to claim 11, comprising a memory being uploaded with signal definitions providing a single control signal setting or a plurality of signals settings providing a plurality of uncorrelated speckle patterns.

15. The system according to claim 11, wherein respective single speckle patterns or a plurality of speckle patterns are generated within an integration time of a detector viewing images being projected in the projection system.

16. A method for controlling speckle contrast in images projected by a laser projection system comprising a specific speckle controlling device, **characterized in** comprising:

identifying desired relief depth or depths, spatial and temporal period or periods and orientation or orientations of a grating in the speckle controlling device providing a specific speckle pattern or patterns,
converting the identified relief depth or depths of the grating into corresponding voltage amplitudes for control signals to be applied onto a plurality of signal input terminals of the specific speckle controlling device,
converting the spatial and temporal period or periods of the grid into frequencies of the signals applied onto the plurality of signal input terminals of the specific speckle controlling device,
identifying the orientation or orientations of the grating relative to an orientation of an image projection surface in the display system, or relative to a surface comprising the grating, and converting this orientation or orientations of the grating into a pattern of respective "on" and "off" signals applied on input terminals,
applying the signals with the identified voltage amplitude and frequency onto the respective identified "on" signal input terminals thereby providing a grating on the reflective surface of the specific speckle controlling device.

17. The method according to claim 16, wherein the step of identifying a specific speckle pattern further comprising the step of identifying a time dependent series of specific uncorrelated speckle patterns.

SYSTEM FOR REDUCING THE SPECKLE CONTRAST ON THE SCREEN

Fig. 1a

SYSTEM FOR REDUCING THE SPECKLE CONTRAST ON THE SCREEN

Static diffuser | Collector lens | Condenser lens

Laser beam

Beam expander

Rotating micro-lens array

Image modulator | Projection system

Screen

Fig. 1.b

Sub-beams

SYSTEM FOR REDUCING THE SPECKLE CONTRAST ON THE SCREEN

Light homogenizer

Laser beam

Beam expander

Spatial light modulator with LC-cells

Lens arrays | Condenser lens

Image modulator | Projection system

Screen

Fig. 1c

Fig. 2a

Fig. 2b

Fig. 3

Fig. 4a

Fig. 4b

Fig. 4c

Fig. 4d

Fig. 5a

INPUT PLANE
OF THE LIGHT HOMOGENIZER

-2
-1
+1
+2

Rotating
diffraction
orders

SYSTEM FOR REDUCING
THE SPECKLE CONTRAST
ON THE SCREEN

SLMDPL
with rotating phase grating

Light
homogenizer

Screen

D

Fourier
lens

F

Illumination system,
image modulator
and projection system

Beam
expander

Laser
beam

Fig. 5b

Fig. 6

The 1st turn;
grating period $\Lambda_1$

The 2nd turn;
grating period $\Lambda_2$

The 3rd turn;
grating period $\Lambda_3$

Fig. 7

Fig. 8

Fig. 9

Fig. 10a

Fig. 10b

Fig. 11

Fig. 12

Fig. 13a

Fig. 13b

Europäisches
Patentamt

European
Patent Office

Office européen
des brevets

# EUROPEAN SEARCH REPORT

**Application Number**

EP 09 17 5783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | KARTASHOV V ET AL: "IMAGE IMPROVEMENT IN A LASER PROJECTION DISPLAY WITH A SPATIAL LIGHT MODULATOR WITH A DEFORMABLE LAYER" JOURNAL OF THE SID, vol. 17, no. 7, July 2009 (2009-07), page 581-587, XP002561521 * the whole document * | 1-15 | INV. G02B5/18 G02B27/48 |
| X | EP 1 471 373 A (XEROX CORP [US]) 27 October 2004 (2004-10-27) | 1-15 | |
| Y | * figures 1F-1H * | 16,17 | |
| Y | US 2006/028961 A1 (KIM SUNG-HA [KR] ET AL) 9 February 2006 (2006-02-09) * abstract; figures * | 16,17 | |
| D,A | WANG L ET AL: "SPECKLE REDUCTION IN LASER PROJECTION SYSTEMS BY DIFRACTIVE OPTICALELEMENTS" APPLIED OPTICS, OSA, OPTICAL SOCIETY OF AMERICA, WASHINGTON, DC, vol. 37, no. 10, 1 April 1998 (1998-04-01), pages 1770-1775, XP000754330 ISSN: 0003-6935 | 1-17 | |
| A | WO 2009/013597 A (POPOVICH MILAN MOMCILO [GB]) 29 January 2009 (2009-01-29) * abstract; figures * | 1-17 | |

TECHNICAL FIELDS
SEARCHED (IPC)

G02B

The present search report has been drawn up for all claims

| Place of search | Date of completion of the search | Examiner |
|---|---|---|
| Munich | 22 December 2009 | Ward, Seamus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 5783

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2009

| Patent document cited in search report | | Publication date | Patent family member(s) | | Publication date |
|---|---|---|---|---|---|
| EP 1471373 | A | 27-10-2004 | JP | 2004326114 A | 18-11-2004 |
| | | | US | 2004212869 A1 | 28-10-2004 |
| US 2006028961 | A1 | 09-02-2006 | BR | PI0503190 A | 21-03-2006 |
| | | | CN | 1731238 A | 08-02-2006 |
| | | | JP | 2006048049 A | 16-02-2006 |
| | | | KR | 20060013023 A | 09-02-2006 |
| | | | NL | 1029680 C2 | 18-02-2008 |
| | | | NL | 1029680 A1 | 07-02-2006 |
| | | | NL | 1029800 C2 | 14-02-2008 |
| | | | NL | 1029800 A1 | 07-02-2006 |
| WO 2009013597 | A | 29-01-2009 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3473862 A, C.E.Hauber and R.E. Kittredge
- US 6594090 B, B.E.Kruschwitz, A.F.Kurtz
- US 20080165401 A, K.Kasazumi
- US 6081381 A, A.Shalapenok, I.Hurevich, D.Velikov, J.Ritter, A.Shkolnik
- US 20080204847 A, M.Kamm, O.Ripoll
- US 3835346 A, F.Mast
- US 2896507 A, F.Mast
- US 3716359 A, N.Sheridon
- US 7414768 B, Y.Guscho
- US 6897995 B, A.Malthe-Sørenssen, E.Zimmer, T.Natestad, B.Jacobson
- US 3882271 A

- US 1975 A
- US 4529620 A
- US 4626920 A
- US 1986 A
- US 7054054 B
- US 2006 A
- US 6930817 B
- US 2005 A
- US 4932747 A
- US 1990 A
- US 6915063 B, S.Kawaai, K.Ohgaki
- US 7399084 B, A.Morikawa, K.Kasazumi, K.Mizuuchi

### Non-patent literature cited in the description

- **J.W.Goodman.** Speckle Phenomena in Optics. Roberts and Company Publishers, 2006
- **A.W.Lohmann.** Image Formation and Multiplicative Noise. *J. Opt. Soc. Am.,* 1965, vol. 55, 1030-1031
- **S.Lowenthal ; D.Joveux.** Speckle Removal by a Slowly Moving Diffuser associated with a Motionless Diffuser. *J. Opt. Soc. Am.,* 1971, vol. 61, 847-851
- **L.Wang et al.** Speckle reduction in laser projection systems by diffractive optical elements. *Applied Optics,* 1998, vol. 37 (10), 1770-1775
- **T.Mizushima ; K.Kasazumi et al.** Laser Projection Display with Low Electric Consumption and Wide Color Gamut by Using Efficient Green SHG Laser and New Illumination Optics. *SID 06 DIGEST,* 2006, 1681-1684
- **M.Scholles et al.** Recent advancements in system design for miniaturized MEMS-based laser projectors. *Proc. of SPIE,* 2008, vol. 6911, 69110U
- Reliability of HTPS Panels Questioned. *Study of Texas Instruments and the Munsell Color Science Laboratory,* 2003
- **Y.Guscho.** *Physics of reliefography,* 1992
- Electrical charge moving in the Reliefography Spatial Light Modulator. **Y.Gushcho ; V.Kartashov.** Photonics and Optoelectronics. Allerton Press Inc, 1994, vol. 2, 71-77

- **V. Kartashov ; L. Henriksen ; J. H. Ulvensøen ; B. Svardal ; T. Svortdal ; R. Berglind ; G. Hedin.** Image improvement in a laser projection display with a spatial light modulator with a deformable polymer. *Journal of the Society for Information Display,* July 2009, vol. 17 (7), 581-587
- **R.Tepe ; R.Gerhard-Multhaupt ; W.Brinker ; W.-D.Molzow.** Viscoelastic spatial light modulator with active matrix addressing. *Appl. Optics,* 1989, vol. 28 (22), 4826-4834
- **W.Brinker ; R.Gerhard-Multhaupt ; W.-D.Molzow ; R.Tepe.** Deformation behaviour of thin viscoelastic layers used in an active-matrix addressed spatial light modulator. *Proc. SPIE,* 1988, vol. 1018, 79-85
- **W.Brinker et al.** Metallized viscoelastic control layers for light-valve projection displays. *Displays,* 1995, vol. 16 (1), 13-20
- **J.W.Goodman.** Introduction to Fourier Optics. McGraw-Hill, 1968
- **B.E.A.Saleh ; M.C.Teich.** Photonics. John Wiley & Sons, Inc, 1991
- **J. W. Goodman.** Introduction to Fourier Optics. Roberts & Company Publishers, 2004